# EUROPÄISCHE PATENTSCHRIFT

(11) **EP 1 001 147 B1**
(45) Veröffentlichungstag und Bekanntmachung des Hinweises auf die Patenterteilung: **17.04.2002**
(21) Anmeldenummer: 99890347.0
(22) Anmeldetag: 28.10.1999
(51) Int. Cl.: F02B 31/08

(54) **Viertakt-Brennkraftmaschine mit mindestens zwei Einlassventilen pro Zylinder**
Four-cycle engine with at least two intake valves per cylinder
Moteur à quatre temps avec au moins deux soupapes d'admission par cylindre

(30) Priorität: 16.11.1998 AT 75998 U
(43) Veröffentlichungstag der Anmeldung: 17.05.2000
(73) Patentinhaber: AVL List GmbH, 8020 Graz (AT)
(72) Erfinder: Rokita, Ralf, Dipl.-Ing., 8181 Mitterdorf/Raab (AT); Kapus, Paul, Dr., 8045 Graz (AT)
(74) Vertreter: Babeluk, Michael, Dipl.-Ing. Mag.

(56) Entgegenhaltungen:
- EP-A- 0 544 978
- EP-A- 0 764 773
- AT-B- 402 535
- AT-U- 2 434
- US-A- 4 550 699
- US-A- 4 550 700
- PATENT ABSTRACTS OF JAPAN vol. 009, no. 100 (M-376), 2. Mai 1985 (1985-05-02) & JP 59 224466 A (TOYOTA JIDOSHA KK), 17. Dezember 1984 (1984-12-17)

## Beschreibung

Die Erfindung betrifft eine Viertakt-Brennkraftmaschine mit mindestens zwei Einlaßventilen pro Zylinder, mit mindestens zwei zu den Einlaßventilen führenden Einlaßkanälen, von welchen ein erster Einlaßkanal als ungedrosselter Tangentialkanal ausgeführt ist und ein zweiter Einlaßkanal eine in Abhängigkeit von der Motorlast betätigbare Drosseleinrichtung aufweist und als Neutralkanal ausgeführt ist, mit zumindest einem Kraftstoff in zumindest zwei Einlaßkanäle einspritzenden Einspritzventil pro Zylinder, welches so angeordnet ist, daß zumindest zwei Kraftstoffstrahlen des Einspritzventiles durch eine definierte Öffnung in der Kanaltrennwand zwischen den beiden Einlaßkanälen hindurch auf Einlaßöffnungen in den Brennraum gerichtet sind, wobei im geschlossenen Zustand der Drosseleinrichtung ein definierter Mindestdurchfluß durch den zweiten Einlaßkanal erzeugbar ist, und wobei die Drosseleinrichtung stromaufwärts der definierten Öffnung im zweiten Einlaßkanal angeordnet ist.

Ständig steigende Anforderungen an den Kraftstoffverbrauch und die Reduktion der Abgasemissionen, insbesondere der Kohlenwasserstoffe und der Stickoxide, erfordern den Einsatz neuer Technologien im Bereich der Verbrennungskraftmaschinen.

Ein wesentlicher Grund für den gegenüber z. B. Dieselmotoren höherem spezifischen Kraftstoffverbrauch einer fremdgezündeten Brennkraftmaschine liegt in der Betriebsweise mit vorgemischtem homogenem Kraftstoff-Luftgemisch. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 25 % geschätzt werden. Ein Teil dieses Verbesserungspotentiales kann genutzt werden, wenn im Teillastbereich eine Verringerung der Drosselung möglich ist.

Aus der AT 402 535 B ist eine Brennkraftmaschine, bei der der Kraftstoff über ein Einspritzventil durch eine Öffnung zwischen zwei benachbarten Kanälen hindurch in beide Einlaßkanäle eingespritzt wird, bekannt. Durch die Öffnung in der Kanaltrennwand zwischen den beiden benachbarten Einlaßkanälen kann allerdings eine Querströmung stattfinden, die zum Verblasen des Einspritzstrahles führt, insbesondere wenn eine Abgasrückführung oder Zuführung von Zusatzluft in den Tangentialkanal erfolgt. Im Extremfall wird der Kraftstoffstrahl, der für den Tangentialkanal bestimmt ist, durch die Öffnung in den Neutralkanal eingespritzt.

Um dies zu verhindern, wird in der AT 2434 U1 bei einer Brennkraftmaschine der genannten Art vorgeschlagen, daß die Drosseleinrichtung in geschlossenem Zustand einen definierten Mindestdurchfluß zwischen 5% und etwa 20% erzeugt. Dadurch soll erreicht werden, daß der Kraftstoffstrahl des Tangentialkanales auch in diesem verbleibt und beide Einspritzstrahlen die Wände der Einlaßkanäle mit Kraftstoff nicht benetzen.

Auch aus der EP 0 764 773 A1 ist es bekannt, im Neutralkanal eine Drosseleinrichtung vorzusehen, welche in geschlossenem Zustand einen definierten Mindestdurchfluß erzeugt, um eine stabile radiale Gemischschichtung zu realisieren, deren Ausprägung mit der Motorlast variiert werden kann. Durch die definierte Leckageöffnung kann allerdings das Verblasen des Kraftstoffstrahles und der damit entstehende Wandbenetzungseffekt an der Außenwand des Neutralkanales nicht völlig vermieden werden, was sich nachteilig auf die Kohlenwasserstoffemissionen auswirkt.

Es ist die Aufgabe der Erfindung, diese Nachteile zu vermeiden, und bei einer Brennkraftmaschine der eingangs genannten Art die Emissionen zu verbessern.

Erfindungsgemäß erfolgt dies dadurch, daß im Bereich der Trennwand zwischen den beiden Einlaßkanälen zumindest zwischen der Drosseleinrichtung und der definierten Öffnung ein durch Strömungsleitflächen definierter Leckageströmungsweg für den Mindestdurchfluß vorgesehen ist. Besonders vorteilhaft ist es dabei, wenn der Leckageströmungsweg zumindest abschnittsweise im wesentlichen parallel zum zweiten Einlaßkanal ausgebildet ist. Es wird somit eine gerichtete Strömung im Bereich der definierten Öffnung erzeugt, welche im wesentlichen parallel zu den Wänden des Neutralkanales verläuft.

In einer möglichen Ausführungsvariante ist vorgesehen, daß der Leckageströmungsweg als Umgehungsleitung fiir die Drosseleinrichtung ausgebildet ist.

Ein besonderer geringer Herstellungsaufwand läßt sich erreichen, wenn der Leckageströmungsweg als mit dem zweiten Einlaßkanal mitgegossener Leckagekanal ausgeführt ist. Der Einlaßströmungsweg kann dabei entweder in den Neutralkanal oder in die Trennwand integriert werden.

In einer anderen, äußerst vorteilhaften Ausführungsvariante ist vorgesehen, daß die Strömungsleitflächen des Leckageströmungsweges im wesentlichen durch eine in den zweiten Einlaßkanal eingesetzte Leiteinrichtung, vorzugsweise ein Leitblech gebildet sind. Dies hat den Vorteil, daß auch im Nachhinein bei einer Brennkraftmaschine ein Leckageströmungsweg eingebaut werden kann, ohne eine wesentliche Änderung im Zwischenflansch oder Saugrohr durchführen zu müssen.

Um eine Wandbenetzung des in den Neutralkanal eintretenden, sich aufweitenden Kraftstoffstrahles möglichst auszuschließen, ist es besonders günstig, wenn sich der Querschnitt des Leckageströmungsweges in Strömungsrichtung erweitert, wobei vorzugsweise die Strömungsleitfläche des Leckageströmungsweges im Bereich des Austrittes im wesentlichen parallel zur Hüllkurve des in diesen Einlaßkanal spritzenden Einspritzstrahles verläuft. Der Leckageströmungsweg kann dabei zumindest abschnittsweise diffusorartige Gestalt aufweisen.

In Weiterführung der Erfindung kann vorgesehen sein, daß die Drosseleinrichtung eine Öffnung aufweist, welche sich im geschlossenen Zustand mit der Eintrittsöffnung des Leckageströmungsweges überlappt. Die Drosseleinrichtung kann dabei entweder als Schieber oder als Klappe ausgeführt sein.

Es hat sich gezeigt, daß durch die gezielte Leckage mittels definiertem Leckageströmungsweg die Kohlenwasserstoffemissionen im transienten Betrieb gegenüber konventionellen Brennkraftmaschinen wesentlich, beispielsweise um rund 10%, gesenkt werden können.

Die Erfindung wird im Folgenden anhand der Figuren näher erläutert.

Es zeigen in schematischer Darstellung:
- Fig. 1: eine Ansicht der erfindungsgemäßen Brennkraftmaschine in Richtung der Zylinderachse in einer Ausführungsvariante,
- Fig. 2a und 2b: zwei Modifikationen dieser Ausführungsvariante in einem Schnitt gemäß der Linie II-II in Fig. 1,
- Fig. 3: eine Ansicht der erfindungsgemäßen Brennkraftmaschine in Richtung der Zylinderachse in einer weiteren Ausführungsvariante,
- Fig. 4: einen Schnitt gemäß der Linie IV-IV in Fig. 3.

Funktionsgleiche Bauteile sind in den Ausführungsvarianten mit gleichen Bezugszeichen versehen.

Eine Brennkraftmaschine weist zumindest einen Zylinder 1 mit zwei Einlaßventilen 2, 3 auf, wobei zum Einlaßventil 2 ein erster Einlaßkanal 4 und zum Einlaßventil 3 ein zweiter Einlaßkanal 5 führt. Erster und zweiter Einlaßkanal 4, 5 münden über Einlaßöffnungen 2a, 3a, welche durch die Einlaßventile 2, 3 steuerbar sind, in einen nicht weiter dargestellten Brennraum. Der erste Einlaßkanal 4 ist als ungedrosselter Tangentialkanal ausgerührt, um im Brennraum eine Drallströmung um die Zylinderachse 6 zu generieren. Im Bereich der Zylinderachse 6 ist eine durch Bezugszeichen 7 angedeutete Zündkerze angeordnet. Mit 8 und 9 sind Auslaßöffnungen bezeichnet, welche zu nicht weiter dargestellten Auslaßkanälen führen.

Im Bereich einer Kanaltrennwand 10 zwischen dem ersten Einlaßkanal 4 und dem zweiten Einlaßkanal 5 ist ein Einspritzventil 11 angeordnet, welches über eine definierte Öffnung 12 in der Kanaltrennwand 10 Kraftstoff 13, 14 in den ersten Einlaßkanal 4 und den zweiten Einlaßkanal 5 einspritzt.

Im zweiten Einlaßkanal 5, welcher als Neutralkanal ausgebildet ist, ist stromaufwärts des Einspritzventiles 11 eine Drosseleinrichtung 15 angeordnet, welche als Schieber oder als Klappe ausgebildet sein kann.

Zumindest zwischen der Drosseleinrichtung 15 und der definierten Öffnung 12 in der Kanaltrennwand 10 ist ein Leckageströmungsweg 16 vorgesehen, welcher zumindest abschnittsweise etwa parallel zur Strömung im zweiten Einlaßkanal 5 verläuft. Die Wände des Leckageströmungsweges 16 sind mit 19 bezeichnet. Die Eintrittsöffnung 16a des Leckageströmungsweges 16 ist dabei im Bereich der Drosseleinrichtung 15, der Austritt 16b im Bereich der Öffnung 12 angeordnet. Im geschlossenen Zustand der Drosseleinrichtung 15 wird somit ein definierter Mindestdurchfluß durch den zweiten Einlaßkanal 5 ermöglicht, welcher beispielsweise 5% bis 20%, vorzugsweise etwa 10% des Maximaldurchflusses beträgt. Dadurch entsteht im Bereich der Einmündung des Kraftstoffes 14 in den zweiten Einlaßkanal 5 eine gerichtete Strömung, welche verhindert, daß durch den etwas geringeren Druck und Durchfluß und daraus folgendem Querströmen durch die Öffnung 12 in der Kanaltrennwand 10 im Neutralkanal der Einspritzstrahl zur Außenwand 5a dieses Einlaßkanales 5 gedrückt wird. Durch diese gezielte Leckageströmung kann die Emission an Kohlenwasserstoffen wesentlich, beispielsweise um etwa 10%, vermindert werden.

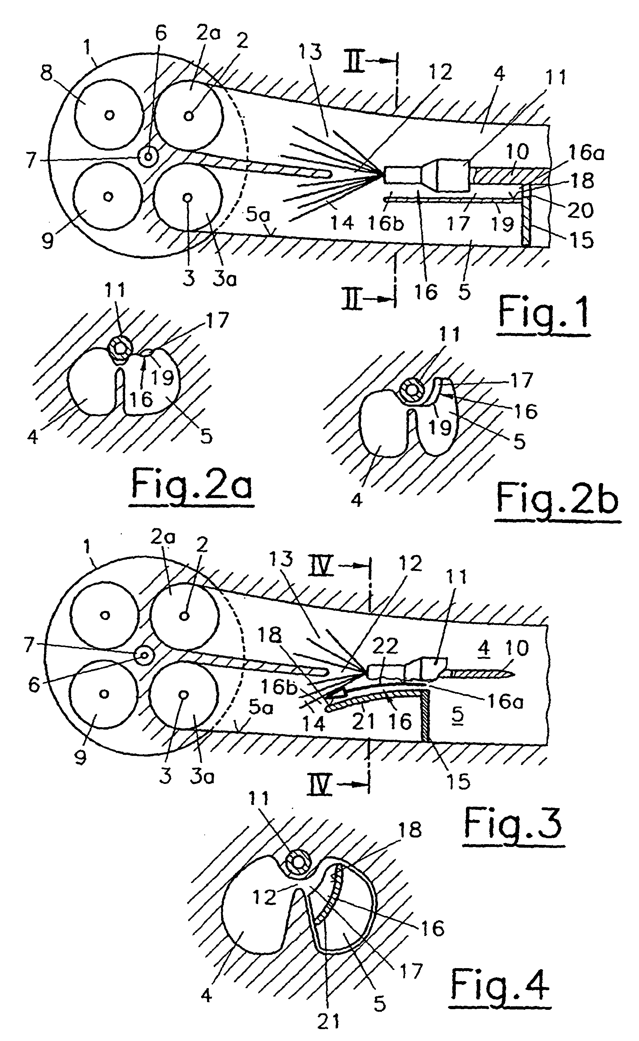

Bei dem in Fig. 1 dargestellten Ausführungsbeispiel wird der Leckageströmungsweg 16 durch einen mit den Einlaßkanälen 4, 5 mitgegossenen Leckagekanal 17 gebildet.

Die Drosseleinrichtung 15 weist eine Öffnung 20 auf, welche in geschlossenem Zustand der Drosseleinrichtung 15 einen Mindestdurchfluß in den Leckagekanal 17 ermöglicht.

Fig. 2a zeigt eine Ausführungsvariante, bei der der Leckagekanal 17 im wesentlichen in die Kanaltrennwand 10 integriert ist und einen im wesentlichen kreisrunden Querschnitt aufweist. Bei der in Fig. 2b dargestellten Ausführungsvariante dagegen folgt die Form des Leckagekanales 17 im Mündungsbereich im wesentlichen der Form der Öffnung 12 für das Einspritzventil 11. Der Leckagekanal 17 weist in dieser Ausführung einen länglichen, gekrümmten Querschnitt auf.

Die in den Fig. 3 und 4 dargestellte Ausführungsvariante unterscheidet sich von den beschriebenen Ausführungsvarianten dadurch, daß die Strömungsleitflächen 18 des Leckageströmungsweges 16 durch eine in den zweiten Einlaßkanal 5 eingesetzte Leiteinrichtung 21, beispielsweise ein Leitblech, gebildet sind, welches sich vom Bereich der Drosseleinrichtung 15 bis zur Öffnung 12 oder über diese hinaus erstreckt. Die Leiteinrichtung 21 kann gekrümmt ausgeführt sein, sodaß sich der Querschnitt des Leckageströmungsweges 16 in Strömungsrichtung hin erweitert. Die Drosseleinrichtung 15 kann dabei beispielsweise durch eine Klappe gebildet sein.

Der Verlauf der Strömung durch den Leckageströmungsweg 16 ist durch den Pfeil 22 angedeutet.

## Patentansprüche

1. Viertakt-Brennkraftmaschine mit mindestens zwei Einlaßventilen (2, 3) pro Zylinder (1), mit mindestens zwei zu den Einlaßventilen (2, 3) führenden Einlaßkanälen (4, 5), von welchen ein erster Einlaßkanal (4) als ungedrosselter Tangentialkanal ausgeführt ist und ein zweiter Einlaßkanal (5) eine in Abhängigkeit von der Motorlast betätigbare Drosseleinrichtung (15) aufweist und als Neutralkanal ausgeführt ist, mit zumindest einem Kraftstoff in zumindest zwei Einlaßkanäle (4, 5) einspritzenden Einspritzventil (11) pro Zylinder (1), welches so angeordnet ist, daß zumindest zwei Kraftstoffstrahlen (13, 14) des Einspritzventiles (11) durch eine definierte Öffnung (12) in der Kanaltrennwand (10) zwischen den beiden Einlaßkanälen (4, 5) hindurch auf Einlaßöffnungen (2a, 3a) in den Brennraum gerichtet sind, wobei im geschlossenen Zustand der Drosseleinrichtung (15) ein definierter Mindestdurchfluß durch den zweiten Einlaßkanal (5) erzeugbar ist, und wobei die Drosseleinrichtung (15) stromaufwärts der definierten Öffnung (12) im zweiten Einlaßkanal (5) angeordnet ist, **dadurch gekennzeichnet, daß** im Bereich der Kanaltrennwand (10) zwischen den beiden Einlaßkanälen (4, 5) zumindest zwischen der Drosseleinrichtung (15) und der definierten Öffnung (12) ein durch Strömungsleitflächen (18) definierter Leckageströmungsweg (16) für den Mindestdurchfluß vorgesehen ist.

2. Brennkraftmaschine nach Anspruch 1, **dadurch gekennzeichnet, daß** der Leckageströmungsweg (16) zumindest abschnittsweise im wesentlichen parallel zum zweiten Einlaßkanal (5) ausgebildet ist.

3. Brennkraftmaschine nach Anspruch 1 oder 2, **dadurch gekennzeichnet, daß** der Leckageströmungsweg (16) als Umgehungsleitung für die Drosseleinrichtung (15) ausgebildet ist.

4. Brennkraftmaschine nach einem der Ansprüche 1 bis 3, **dadurch gekennzeichnet, daß** der Leckageströmungsweg (16) als mit dem zweiten Einlaßkanal mitgegossener Leckagekanal (17) ausgeführt ist.

5. Brennkraftmaschine nach einem der Ansprüche 1 bis 4, **dadurch gekennzeichnet, daß** der Leckageströmungsweg (16) im wesentlichen in den zweiten Einlaßkanal (5) integriert ist.

6. Brennkraftmaschine nach einem der Ansprüche 1 bis 5, **dadurch gekennzeichnet, daß** der Leckageströmungsweg (16) im wesentlichen in die Kanaltrennwand (10) zwischen den beiden Einlaßkanälen (4, 5) integriert ist.

7. Brennkraftmaschine nach einem der Ansprüche 1 bis 6, **dadurch gekennzeichnet, daß** die Strömungsleitflächen (18) des Leckageströmungsweges (16) im wesentlichen durch eine in den zweiten Einlaßkanal (5) eingesetzte Leiteinrichtung (21), vorzugsweise ein Leitblech, gebildet sind.

8. Brennkraftmaschine nach einem der Ansprüche 1 bis 7, **dadurch gekennzeichnet, daß** die Form des Leckageströmungsweges (16) im Mündungsbereich im wesentlichen der Form der Öffnung (12) für das Einspritzventil (11) folgt.

9. Brennkraftmaschine nach einem der Ansprüche 1 bis 8, **dadurch gekennzeichnet, daß** sich der Querschnitt des Leckageströmungsweges (16) in Strömungsrichtung erweitert, wobei vorzugsweise die Strömungsleitfläche (18) des Leckageströmungsweges (16) im Bereich seines Austrittes (16b) im wesentlichen parallel zur Hüllkurve des in den zweiten Einlaßkanal (5) spritzenden Einspritzstrahles (14) verläuft.

10. Brennkraftmaschine nach einem der Ansprüche 1 bis 9, **dadurch gekennzeichnet, daß** die Drosseleinrichtung (15) eine Öffnung (20) aufweist, welche sich im geschlossenen Zustand mit der Eintrittsöffnung (16a) des Leckageströmungsweges (16) überlagert.

## Claims

1. A four-stroke internal combustion engine with at least two intake valves (2, 3) per cylinder (1), with at least two intake ports (4, 5) leading to the intake valves (2, 3), of which ports a first intake port (4) is configured as an unthrottled tangential port and a second intake port (5) comprises a throttling device (15), which can be actuated depending on the engine load, and is configured as a neutral port, with at least one injection valve (11) per cylinder (1) which injects fuel into at least two intake ports (4, 5) and which is arranged in such a way that at least two fuel jets (13, 14) of the intake valve (11) are directed through a defined aperture (12) in the port separation wall (10) between the two intake ports (4, 5) against intake apertures (2a, 3a) into the combustion chamber, with a defined minimum flow through the second intake port (5) being definable in the closed state of the throttling device (15) and with the throttling device (15) being disposed upstream of the defined aperture (12) in the second intake port (5), **characterized in that** in the zone of the port separation wall (10) between the two intake ports (4, 5) a leakage flow path (16) for the minimum flow as defined by flow guide surfaces (18) is provided at least between the throttling device (15) and the defined aperture (12).

2. An internal combustion engine as claimed in claim 1, **characterized in that** the leakage flow path (16) is arranged at least in sections substantially parallel to the second intake port (5).

3. An internal combustion engine as claimed in claim 1 or 2, **characterized in that** the leakage flow path (16) is arranged as a by-pass line for the throttling device (15).

4. An internal combustion engine as claimed in one of the claims 1 to 3, **characterized in that** the leakage flow path (16) is arranged as a leakage conduit (17) which is simultaneously cast with the second intake port.

5. An internal combustion engine as claimed in one of the claims 1 to 4, **characterized in that** the leakage flow path (16) is substantially integrated in the second intake port (5).

6. An internal combustion engine as claimed in one of the claims 1 to 5, **characterized in that** the leakage flow path (16) is substantially integrated in the port separation wall (10) between the two intake ports (4, 5).

7. An internal combustion engine as claimed in one of the claims 1 to 6, **characterized in that** the flow guide surfaces (18) of the leakage flow path (16) are substantially formed by a guide device (21) which is inserted in the second intake port (5) and is preferably a guide plate.

8. An internal combustion engine as claimed in one of the claims 1 to 7, **characterized in that** the shape of the leakage flow path (16) substantially follows the shape of the aperture (12) for the injection valve (11) in the orifice zone.

9. An internal combustion engine as claimed in one of the claims 1 to 8, **characterized in that** the cross-section of the leakage flow path (16) expands in the direction of the flow, with preferably the flow guide surface (18) of the leakage flow path (16) extending in the zone of its outlet (16b) substantially parallel to the generating curve of an envelope of the injection jet (14) injecting into the second intake port (5).

10. An internal combustion engine as claimed in one of the claims 1 to 9, **characterized in that** the throttling device (15) is provided with an aperture (20) which overlaps in the closed state with the intake aperture (16a) of the leakage flow path (16).

## Revendications

1. Moteur à combustion interne à quatre temps avec au moins deux soupapes d'admission (2, 3) par cylindre (1), avec au moins deux conduits d'admission (4, 5) menant aux soupapes d'admission (2, 3), un premier conduit d'admission (4) étant réalisé sous forme de conduit tangentiel non obturé et un deuxième conduit d'admission (5) étant pourvu d'un organe d'étranglement (15) manoeuvrable en fonction de la charge subie par le moteur et étant réalisé sous forme de conduit neutre, avec au moins une soupape d'injection (11) par cylindre (1), ladite soupape injectant le carburant dans au moins deux conduits d'admission (4, 5) et étant disposée de telle sorte qu'au moins deux jets de carburant (13, 14) de la soupape d'injection (11) soient dirigés sur des orifices d'admission (2a, 3a) dans la chambre de combustion après avoir passé par un orifice (12) défini dans la cloison (10) séparant les deux conduits d'admission (4, 5), un débit minimum défini, passant par le deuxième conduit d'admission (5), pouvant être produit quand l'organe d'étranglement (15) est fermé, ledit organe d'étranglement (15) étant disposé en amont de l'orifice (12) défini dans le deuxième conduit d'admission (5), **caractérisé en ce qu'**un tracé d'écoulement des fuites (16) défini par des faces conductrices dudit écoulement (18) est prévu pour le débit minimum dans la région de la cloison (10) séparant les deux conduits d'admission (4, 5), et ce au moins entre l'organe d'étranglement (15) et l'orifice défini (12).

2. Moteur à combustion interne selon la revendication 1, **caractérisé en ce que** le tracé d'écoulement des fuites (16) est du moins en partie sensiblement parallèle au deuxième conduit d'admission (5).

3. Moteur à combustion interne selon la revendication 1 ou 2, **caractérisé en ce que** le tracé d'écoulement des fuites (16) est réalisé sous forme de by-pass pour l'organe d'étranglement (15).

4. Moteur à combustion interne selon l'une des revendications 1 à 3, **caractérisé en ce que** le tracé d'écoulement des fuites (16) est réalisé sous forme de conduit de fuite (17) sensiblement coulé dans la même masse que le deuxième conduit d'admission.

5. Moteur à combustion interne selon l'une des revendications 1 à 4, **caractérisé en ce que** le tracé d'écoulement des fuites (16) est sensiblement intégré dans le deuxième conduit d'admission (5).

6. Moteur à combustion interne selon l'une des revendications 1 à 5, **caractérisé en ce que** le tracé d'écoulement des fuites (16) est sensiblement intégré dans la cloison (10) séparant les deux conduits d'admission (4, 5).

7. Moteur à combustion interne selon l'une des revendications 1 à 6, **caractérisé en ce que** les faces conductrices d'écoulement (18) du tracé d'écoulement des fuites (16) sont sensiblement formées par un dispositif de guidage (21), de préférence un déflecteur, inséré dans le deuxième conduit d'admission (5).

8. Moteur à combustion interne selon l'une des revendications 1 à 7, **caractérisé en ce que** la forme du tracé d'écoulement des fuites (16) à son débouché épouse sensiblement la forme de l'orifice (12) vers la soupape d'injection (11).

9. Moteur à combustion interne selon l'une des revendications 1 à 8, **caractérisé en ce que** la section du tracé d'écoulement des fuites (16) s'élargit dans la direction de l'écoulement, la surface conductrice (18) du tracé d'écoulement des fuites (16) étant à sa sortie (16b) de préférence sensiblement parallèle à l'enveloppe du jet d'injection (14) jaillissant dans le deuxième conduit d'admission (5).

10. Moteur à combustion interne selon l'une des revendications 1 à 9, **caractérisé en ce que** l'organe d'étranglement (15) est pourvu d'un orifice (20) qui, lorsqu'il est fermé, se superpose à l'orifice d'entrée (16a) du tracé d'écoulement des fuites (16).
